# EUROPEAN PATENT SPECIFICATION

(11) **EP 3 173 895 B1**
(45) Date of publication and mention of the grant of the patent: **28.11.2018**
(21) Application number: 14881692.9
(22) Date of filing: 25.12.2014
(51) Int. Cl.: G06F 1/12, G06F 1/10, G06F 13/42, G06F 15/78, G06F 1/08

(54) **CLOCK TREE IMPLEMENTATION METHOD, SYSTEM-ON-CHIP AND COMPUTER STORAGE MEDIUM**
TAKTBAUMIMPLEMENTIERUNGSVERFAHREN, SYSTEM-ON-CHIP UND COMPUTERSPEICHERMEDIUM
PROCÉDÉ DE MISE EN OEUVRE D'ARBRE D'HORLOGE, SYSTÈME SUR PUCE ET SUPPORT DE STOCKAGE INFORMATIQUE

(30) Priority: 23.07.2014 CN 201410353167
(43) Date of publication of application: 31.05.2017
(73) Proprietor: Sanechips Technology Co., Ltd., Nanshan District Shenzhen, Guangdong 518055 (CN)
(72) Inventor: ZHANG, Qing, Shenzhen Guangdong 518055 (CN); LI, Jian, Shenzhen Guangdong 518055 (CN); LIU, Guisheng, Shenzhen Guangdong 518055 (CN)
(74) Representative: Gevers Patents
(86) International application number: PCT/CN2014/095001
(87) International publication number: WO 2015/117524

(56) References cited:
- CN-A- 101 063 894
- CN-A- 101 183 347
- CN-A- 102 207 920
- US-A1- 2006 080 492
- US-A1- 2008 133 800
- NAM-JOON KIM ET AL: "Design of AMBA/spl trade/ wrappers for multiple-clock operations", COMMUNICATIONS, CIRCUITS AND SYSTEMS, 2004. ICCCAS 2004. 2004 INTERNAT IONAL CONFERENCE ON CHENGDU, CHINA 27-29 JUNE 2004, PISCATAWAY, NJ, USA,IEEE, US, 27 June 2004 (2004-06-27), page 1438, XP010732164, DOI: 10.1109/ICCCAS.2004.1346445 ISBN: 978-0-7803-8647-1
- WATN R ET AL: "Independent clocks for peripheral modules in system-on-chip design", SOC CONFERENCE, 2003. PROCEEDINGS. IEEE INTERNATIONAL [SYSTEMS-ON-CHIP ] 17-20 SEPT. 2003, PISCATAWAY, NJ, USA,IEEE, 17 September 2003 (2003-09-17), pages 25-28, XP010665533, DOI: 10.1109/SOC.2003.1241455 ISBN: 978-0-7803-8182-7

## Description

### TECHNICAL FIELD

The disclosure relates to the design field of System on Chip (SoC), and in particular to a clock tree implementation method, an SoC, and a computer storage medium.

### BACKGROUND

At present, SoC design is a core technology for development of the communication industry. It is required to consider factors, such as Performance, Power, Time-to-Market, and Area (i.e., a PPTA standard), for the SoC design. In the SoC design, generation of a clock tree has important influences on the above-mentioned factors. Particularly when the frequency of the SoC is very high and the area is very large, these influences may be decisive.

In the related art, modules are divided on the basis of physical implementability. An SoC adopts an Advanced Microcontroller Bus Architecture 3.0 (AMBA3.0). That is, a data bus is mainly an Advanced eXtensible Interface (AXI) bus, and a configuration bus is an Advanced High performance Bus (AHB) or an Advanced Peripheral Bus (APB).

Specifically, in the SoC, a core module is independently arranged, and includes an interconnection matrix, a bus conversion bridge, a frequency divider (i.e., a top CRM unit), and the like. In the interconnection matrix, a data bus is an AXI bus with a relatively high frequency; a configuration bus is an AHB/APB with a relatively low frequency; and the AHB/APB is implemented by an AXI bus via an AXI-to-AHB or AXI-to-APB conversion bridge. Inside the core module, multiple configuration buses will be generated through multiple similar conversion bridges, and will be synchronously connected to configuration buses of other externally connected modules of the SoC. Furthermore, multiple data buses of the core module are also connected to data buses of the other externally connected modules respectively.

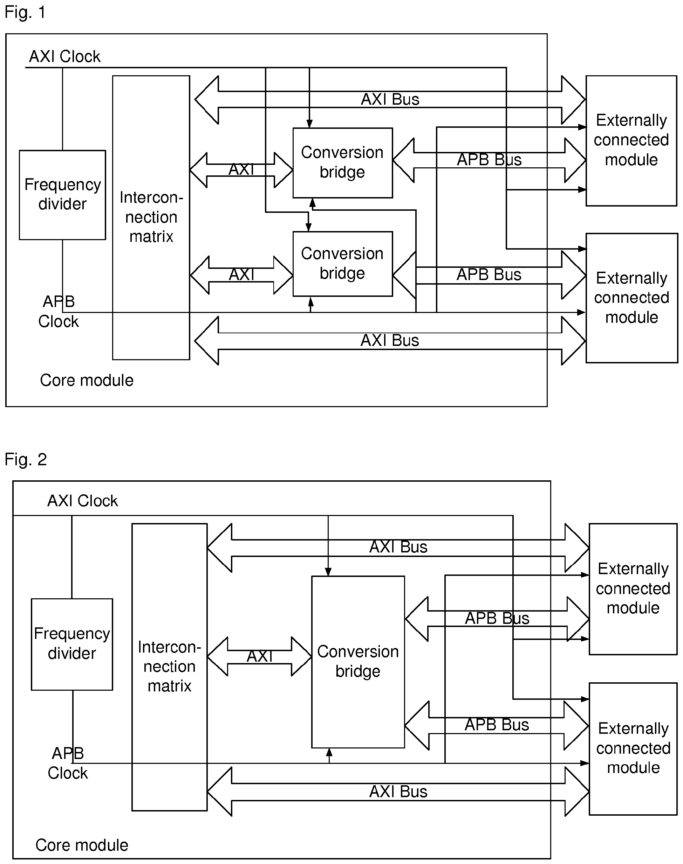

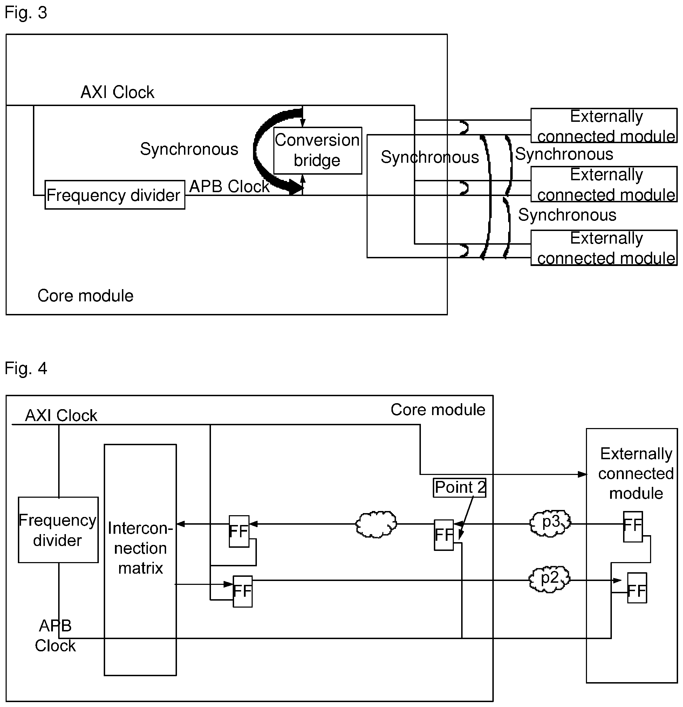

As shown in Fig. 1, the interconnection matrix in the core module is connected to two externally connected modules via two AXI-to-APB conversion bridges respectively. Further, in order to simplify the logic design, the bus conversion bridge may be a synchronous bridge, that is, an APB frequency is obtained by synchronously dividing an AXI frequency. As shown in Fig. 2, the interconnection matrix in the core module is connected to two externally connected modules via a 1-to-2 AXI-to-APB conversion bridge. Thus, from the perspective of the interconnection matrix, all buses connected thereto are synchronous, that is, data buses and configuration buses of each Intellectual Property (IP) function module connected to the core module are synchronous, and the data buses and configuration buses of each IP function module are synchronous relative to each other. From the perspective of the logic design, all buses in the entire SoC are synchronous logically, as shown in Fig. 3. Thus, from the perspective of physical implementation, it is required that the clock tree achieves full-chip synchronization.

However, when the SoC frequency is improved and the area is increased, such a design brings a great challenge to rear-end physical implementation, which not only causes that the needed area and power of the entire clock tree become large, but also enables the time-to-market to be prolonged. A main timing path of an SoC architecture shown in Fig. 1 or Fig. 2 is taken as an example. As shown in Fig. 4, interface circuits may be within the same clock domain or across clock domains. On one hand, as for the interface circuits (p3) for a same clock domain, configuration buses of each IP function module are needed, and if they are not distinguished from each other, they will work under the same APB clock. On the other hand, as for clock domain crossing interface circuits (p2), rear-end physical design still adopts a synchronous implementation mode, that is, achieving closure under the same AXI clock. Therefore, system buses of the entire SoC are required to achieve timing closure under a high-frequency AXI clock. The system buses herein include the data buses and the configuration buses.

When there are too many registers and physical locations are relatively scattered in distribution, the latency of a clock tree will be very large. Accordingly, On Chip Variation (OCV) influences become large, power consumption becomes large, and congestion is also large. Furthermore, if an interface circuit is freely placed via a tool, a further problem of timing closure will be brought.

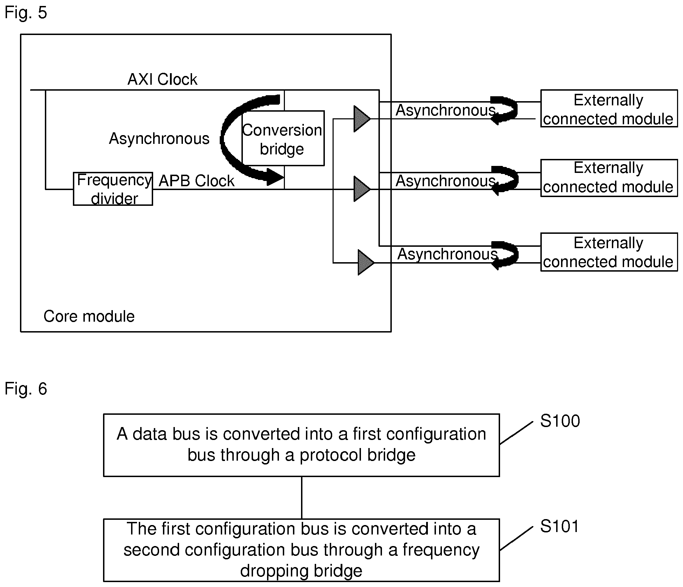

In order to solve the above-mentioned problem, a synchronous bridge may be replaced with an asynchronous bridge to implement conversion between different protocol buses, as shown in Fig. 5. However, usage of the asynchronous bridges may bring problems relating to different lateral logic and physical design such as the complex problems of synthesis and static timing analysis. Moreover, the area and power consumption of the conversion bridges will be increased accordingly.

The article "Design of AMBA™ Wrappers for Multiple-Clock Operations" discloses a novel MABATM-based SoC architecture that allows the integration of IPs with different operating frequencies.

US-A-2006/0080492 discloses a bridge for interfacing buses within an embedded system. There is provided a method of interfacing a first bus and a second bus operating at different speeds.

### SUMMARY

Embodiments of the disclosure provide a clock tree implementation method, an SoC, and a computer storage medium, capable of making configuration buses globally asynchronous and locally synchronous while keeping data buses globally synchronous, so as to achieve PPTA optimization of SoC design.

The technical solution of the embodiments of the disclosure is implemented as follows.

The embodiments of the disclosure provide a clock tree implementation method, applied to an SoC including a core module and an externally connected module. An interconnection matrix in the core module is connected to the externally connected module via a bus conversion bridge including a protocol bridge and a frequency dropping bridge. The method may include the following steps:
a data bus is converted into a first configuration bus through the protocol bridge, the frequency of the first configuration bus being the frequency of the protocol bridge, wherein the data bus is an AXI bus, both the first configuration and the second configuration bus are AHBs or APBs, and, the protocol bridge is a synchronous bridge; and
the first configuration bus is converted into a second configuration bus through the frequency dropping bridge, the frequency of the second configuration bus being the frequency of a configuration bus of the externally connected module.
In an embodiment, the protocol bridge may be a single-stage protocol bridge, and when there are N externally connected modules, the protocol bridge may include N single-stage protocol bridges having a same frequency; and
the step that the data bus is converted into the first configuration bus through the protocol bridge may include the following step:
   N data buses are converted into N first configuration buses respectively via the N single-stage protocol bridges having the same frequency, where N is a positive integer greater than or equal to 2.

In an embodiment, the protocol bridge may be an N-stage protocol bridge, and When there are N externally connected modules, the N-stage protocol bridge may consist of a single-stage protocol bridge and a 1-to-N conversion bridge; and
the step that the data bus is converted into the first configuration bus through the protocol bridge may include the following step:
one data bus is converted into one first configuration bus via the single-stage protocol bridge, and then said one first configuration bus is synchronously divided into N first configuration buses via the 1-to-N conversion bridge.

The embodiments of the disclosure also provide an SoC. The SoC includes a core module and an externally connected module. The core module includes a frequency divider, an interconnection matrix and a bus conversion bridge. The interconnection matrix is connected to the externally connected module via the bus conversion bridge. The bus conversion bridge consists of a protocol bridge and a frequency dropping bridge;
specifically, the protocol bridge is configured to convert a data bus into a first configuration bus, the frequency of the first configuration bus being the frequency of the protocol bridge, wherein the data bus is an AXI bus, both the first configuration and the second configuration bus are AHBs or APBs, and, the protocol bridge is a synchronous bridge; and
the frequency dropping bridge may be configured to convert the first configuration bus into a second configuration bus, the frequency of the second configuration bus being the frequency of a configuration bus of the externally connected module.

In an embodiment, the protocol bridge may be a single-stage protocol bridge. When there are N externally connected modules, the protocol bridge may include N single-stage protocol bridges having a same frequency; and
the N single-stage protocol bridges having the same frequency may be configured to convert N data buses into N first configuration buses respectively, N being a positive integer greater than or equal to 2.

In an embodiment, the protocol bridge may be an N-stage protocol bridge. When there are N externally connected modules, the N-stage protocol bridge may consist of a single-stage protocol bridge and a 1-to-N conversion bridge;
the single-stage protocol bridge may be configured to convert one data bus into one first configuration bus; and
the1-to-N conversion bridge may be configured to synchronously divide said one first configuration bus into N first configuration buses.

The embodiments of the disclosure also provide a computer storage medium having stored therein computer-executable instructions configured to execute the clock tree implementation method according to the embodiments of the disclosure.

According to the clock tree implementation method, the SoC and the computer storage medium provided by the embodiments of the disclosure, the data bus is converted into the first configuration bus, wherein the first configuration bus is an AXI bus, via the protocol bridge, the frequency of the first configuration being the frequency of the protocol bridge; and the first configuration bus is converted into the second configuration bus, wherein the second configuration bus is an AHB or APB bus, via the frequency dropping bridge, the frequency of the second configuration bus being the frequency of the configuration bus of the externally connected module. In this way, configuration buses can be globally asynchronous and locally synchronous while data buses are kept globally synchronous, so as to achieve PPTA optimization of SoC design, thereby improving the design flexibility of the SoC and competitiveness.

### BRIEF DESCRIPTION OF THE DRAWINGS

Fig. 1 is a diagram of an SoC architecture having two conversion bridges in the related art;
Fig. 2 is a diagram of an SoC architecture having one 1-to-2 conversion bridge in the related art;
Fig. 3 is a structural diagram of a chip clock with clock full-synchronization in the related art.
Fig. 4 is a main timing path diagram of an SoC architecture as shown in Fig. 1 or Fig. 2 in the related art;
Fig. 5 is a structural diagram of a chip clock with fully-synchronous data buses and asynchronous configuration buses in the related art;
Fig. 6 is an implementation flow diagram of a clock tree implementation method according to an example of the disclosure;
Fig. 7 is a composition structure diagram of an SoC according to an example of the disclosure;
Fig. 8 is a diagram of an SoC architecture in which a protocol bridge is a single-stage protocol bridge and there are two externally connected modules according to an embodiment of the disclosure;
Fig. 9 is a diagram of an SoC architecture in which a protocol bridge is a two-stage protocol bridge and there are two externally connected modules according to an embodiment of the disclosure;
Fig. 10 is a main timing path diagram 1 of an SoC architecture as shown in Fig. 8 or Fig. 9 in an embodiment of the disclosure; and
Fig. 11 is a main timing path diagram 2 of an SoC architecture as shown in Fig. 8 or Fig. 9 in an embodiment of the disclosure.

### DETAILED DESCRIPTION

In the embodiments of the disclosure, an SoC includes a core module and an externally connected module. The core module may include a frequency divider, an interconnection matrix and a bus conversion bridge. The interconnection matrix in the core module is connected to the externally connected module via a bus conversion bridge, the bus conversion bridge including a protocol bridge and a frequency dropping bridge. When the bus conversion bridge implements bus frequency conversion, a data bus is converted into a first configuration bus through the protocol bridge, the frequency of the first configuration being the frequency of the protocol bridge. Then, the first configuration bus is converted into a second configuration bus through the frequency dropping bridge, the frequency of the second configuration bus being the frequency of a configuration bus of the externally connected module.

Here, the protocol bridge is a synchronous bridge.

It is important to note that the SoC adopts an AMBA3.0. That is, the data bus adopts an AXI bus, and both the first configuration bus and the second configuration bus are AHBs or APBs.

The disclosure will be further elaborated below in conjunction with the accompanying drawings and specific embodiments.

Fig. 6 is an implementation flow diagram of a clock tree implementation method according to an example of the disclosure. The method is applied to an SoC including a core module and an externally connected module. An interconnection matrix in the core module is connected to the externally connected module via a bus conversion bridge including a protocol bridge and a frequency dropping bridge. As shown in Fig. 6, the clock tree implementation method of the example of the disclosure includes the following steps.

Step S100: A data bus is converted into a first configuration bus through the protocol bridge, the frequency of the first configuration being the frequency of the protocol bridge.

Here, the protocol bridge may be a single-stage protocol bridge or may also be an N-stage protocol bridge, where N is a positive integer greater than or equal to 2.

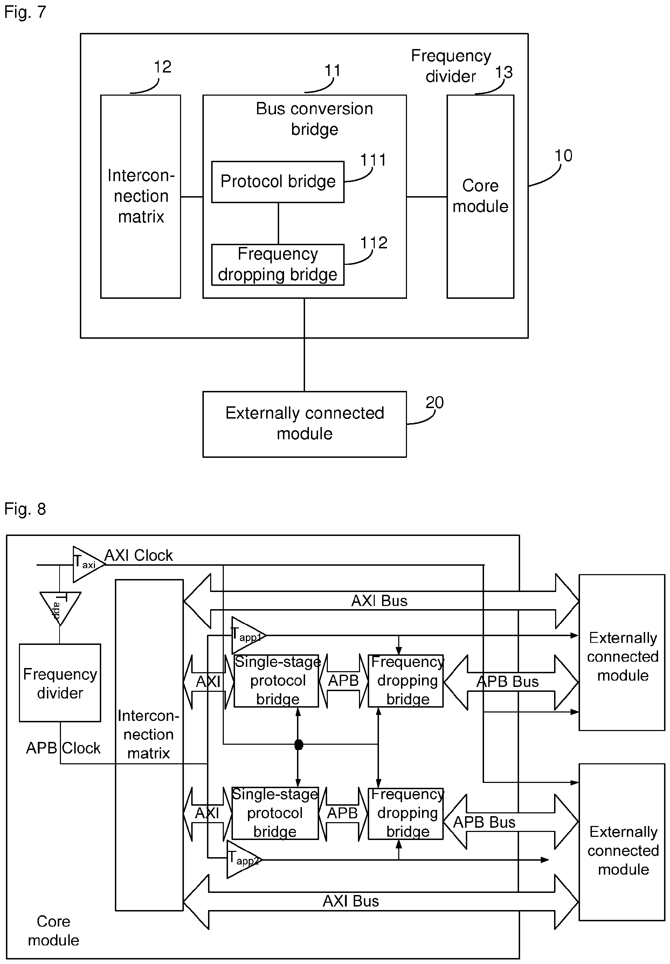

When the protocol bridge is the single-stage protocol bridge and it is supposed that there are N externally connected modules, the protocol bridge includes N single-stage protocol bridges having a same frequency. As shown in Fig. 8, N is equal to 2, and the protocol bridge includes two single-stage protocol bridges having the same frequency. The step that the data bus is converted into the first configuration bus via the protocol bridge includes that: N data buses are converted into N first configuration buses respectively through the N single-stage protocol bridges having the same frequency.

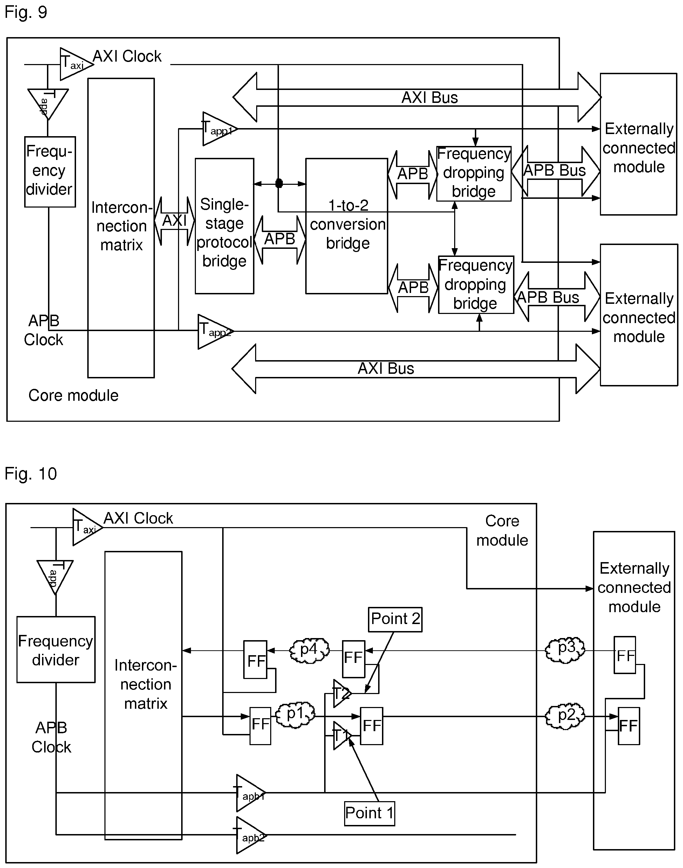

When the protocol bridge is the N-stage protocol bridge and it is supposed that there are N externally connected modules, the N-stage protocol bridge consists of a single-stage protocol bridge and a 1-to-N conversion bridge. As shown in Fig. 9, N is equal to 2, and the N-stage protocol bridge includes a single-stage protocol bridge and a 1-to-N conversion bridge. The step that the data bus is converted into the first configuration bus through the protocol bridge includes that: one data bus is converted into one first configuration bus via the single-stage protocol bridge; and said one first configuration bus is synchronously divided into N first configuration buses via the 1-to-N conversion bridge.

Step S101: The first configuration bus is converted into a second configuration bus through the frequency dropping bridge, the frequency of the second configuration bus being the frequency of a configuration bus of the externally connected module.

The example of the disclosure also provides a computer storage medium having stored therein computer-executable instructions. The computer-executable instructions are configured to execute the clock tree implementation method according to the example of the disclosure. Fig. 7 is a composition structure diagram of an SoC according to an example of the disclosure. As shown in Fig. 7, the SoC of the example of the disclosure includes a core module 10 and externally connected modules 20. The core module 10 includes a frequency divider 13, an interconnection matrix 12 and a bus conversion bridge 11. The interconnection matrix 12 is connected to each externally connected module 20 via the bus conversion bridge 11. The bus conversion bridge 11 consists of a protocol bridge 111 and more than one frequency dropping bridge 112.

The protocol bridge 111 is configured to convert a data bus into a first configuration bus, the frequency of the first configuration being the frequency of the protocol bridge.

In practical application, the protocol bridge 111 may include more than one single-stage protocol bridge, the single-stage protocol bridges being in one-to-one correspondence with the frequency dropping bridges 112. The protocol bridge may also consist of a single-stage protocol bridge and a 1-to-N conversion bridge, output ports of the conversion bridge being in one-to-one correspondence with the frequency dropping bridges 112.

The frequency dropping bridges 112 are configured to convert the first configuration bus into a second configuration bus, the frequency of the second configuration bus being the frequency of a configuration bus of each externally connected module.

Here, when the protocol bridge 111 is the single-stage protocol bridge and there are N externally connected modules, the protocol bridge 111 includes N single-stage protocol bridges having a same frequency. The N single-stage protocol bridges having the same frequency convert N data buses into N first configuration buses respectively, wherein N is a positive integer greater than or equal to 2.

Fig. 8 shows an SoC architecture according to an embodiment of the invention in which the protocol bridge 111 is the single-stage protocol bridge and there are two externally connected modules according to the embodiment of the disclosure. The data bus is an AXI bus, and both the first configuration bus and the second configuration bus are APBs. As shown in Fig. 8, in the interconnection matrix, two AXI buses are converted into two first APBs respectively via two single-stage protocol bridges having the same frequency, so the frequency of each of the two first APBs is the frequency of the protocol bridge; further, the first APBs are converted into second APBs via the frequency dropping bridge; and the frequencies of the second APBs are the frequencies of the configuration buses of the externally connected modules. Thus, from the perspective of the SoC, configuration buses can be globally asynchronous and locally synchronous while data buses are kept globally synchronous, so as to achieve expected PPTA optimization of SoC design.

Here, when the protocol bridge 111 adopts the N-stage protocol bridge and there are N externally connected modules, the N-stage protocol bridge consists of a single-stage protocol bridge and a 1-to-N conversion bridge.

The single-stage protocol bridge is configured to convert one data bus into one first configuration bus.

The1-to-N conversion bridge is configured to synchronously divide said one first configuration bus into N first configuration buses, wherein N is a positive integer greater than or equal to 2.

In an embodiment of the invention, Fig. 9 shows an SoC architecture in which the protocol bridge 111 adopts a two-stage protocol bridge and there are two externally connected modules according to the embodiment of the disclosure. The data bus is an AXI bus, and both the first configuration bus and the second configuration bus are APBs. As shown in Fig. 9, the protocol bridge 111 consists of a single-stage protocol bridge and a 1-to-2 conversion bridge. In the interconnection matrix, one AXI bus is converted into one first APB via the single-stage protocol bridge, and said one first APB is synchronously divided into two first APBs via the 1-to-2 conversion bridge, so the frequency of each of the two first APBs is the frequency of the protocol bridge; further, the first APBs are converted into second APBs via the frequency dropping bridge; and the frequencies of the second APBs are the frequencies of the configuration buses of the externally connected modules. Thus, from the perspective of the SoC, configuration buses can be globally asynchronous and locally synchronous while data buses are kept globally synchronous, so as to achieve expected PPTA optimization of SoC design.

It is important to additionally note that in order to facilitate rear-end physical implementation, during code design of a Register Transfer Level (RTL), in the frequency divider (i.e., top CRM unit) of the core module, a specially-named buffer will be attached to a clock of each configuration bus, so as to facilitate identification by the rear-end, such as buffers Tapb, Tapb1 and Tapb2 as shown in Fig. 8 and Fig. 9. In addition, it is also necessary to give register information of each group of configuration buses (APBs) in the frequency dropping bridge at an APB clock domain.

A physical implementation process of the SoC architecture shown in Fig. 8 or Fig. 9 will be described below in detail.

Fig. 10 is a main timing path diagram 1 of an SoC architecture as shown in Fig. 8 or Fig. 9 in an embodiment of the disclosure. As shown in Fig. 10, data buses (AXI buses) of an entire SoC are still globally synchronous. Therefore, more Flip Flops (FF) need to be globally synchronized, and they are scattered within the range of a full chip. Thus, the latency of an AXI clock Laxi is large. In a core module, configuration buses (e.g., APBs) of frequency dropping bridges and externally connected modules are kept synchronous respectively, so as to form multiple locally-synchronous APBs.

Specifically, in a configuration bus (e.g., APB), an independent APB synchronous bus is formed behind each buffer TapbN. As for a certain locally synchronous bus apbN, fewer FFs need to be locally synchronized and they are locally located and relatively concentrated. With respect to an AXI bus, the latency LapbN of the locally synchronous bus apbN is smaller, that is, Laxi>Lapb1, where N ranges from 1 to the number of apb clock domains used.

A locally synchronous clock domain apb1 is taken as an example below to briefly describe how a main timing path of the core module implements timing regulation.

Firstly, it is considered that a bus write operation in the core module includes protocol conversion and clock frequency dropping, and a timing path p1 as shown in Fig. 10 is a clock domain crossing path from an AXI to an APB. As for the timing path p1, although related timing constraints may be weakened by using a multi-cycle path, timing is easy to be satisfied since this part in a bus protocol is simple logically and physical locations are relatively concentrated during rear-end implementation, so constraints are made still according to a single-cycle (cycle of AXI clock) path.

Specifically, timing constraints of the timing path p1 are as follows.

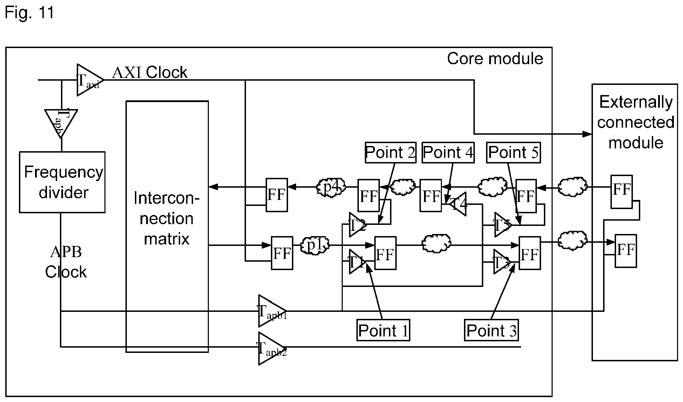

As for timing of Setup time, it is required that Laxi+Dck-q+Dp1 +Dsetup<Paxi+Lapb1, and as for timing of Hold time, it is required that Laxi+Dck-q+Dp1>Lapb1+Dhold, where Laxi represents latency of AXI clock, Lapb1 represents latency of APB1 clock, Dck-q represents delay of pin CK to pin Q of Flip Flop, Dp1 represents delay of combination of Path1, Dsetup represents setup time of Flip Flop, Dhold represents hold time of Flip Flop, and Paxi represents cycle of AXI clock. Therefore, if timing violation occurs, a clock corresponding to an apb1 pin CK may be delayed at a position of point 1 as shown in Fig. 10. Specifically, delay of pin CK of Flip Flop at the point 1 may be increased. That is, the number of buffers T1 is increased to implement timing regulation. If one-stage adjustment does not satisfy timing, a main timing path shown in Fig. 11 may be adopted to further continuously perform similar adjustment at a point 3 until all timing paths of the write operation meet the requirements.

Secondly, timing paths p2 and p3 as shown in Fig. 10 in a local clock domain apb1 are taken into consideration. Since the timing paths p2 and p3 are within the same clock domain and the clock frequency of the local clock domain apb1 is lower than the AXI clock frequency, namely smaller than or equal to half of the AXI clock frequency, timing of the timing paths p2 and p3 may easily achieve timing closure as long as a clock tree is balanced.

Finally, a bus read operation in the core module and a timing path p4 as shown in Fig. 10 are considered. Timing constraints of the timing path p4 are as follows.

As for timing of Setup time, it is required that Lapb1+Dck-q+Dp4+Dsetup<Paxi+Laxi, and as for timing of Hold time, it is required that Lapb1+Dck-q+Dp4>Laxi+Dhold. Therefore, if timing violation occurs, dynamic adjustment may be performed at a position point 2. Specifically, delay of pin CK of Flip Flop at the point 2 may be decreased. That is, a clock at pin CK of apb1 is appropriately shortened, namely the number of buffers T2 is reduced. If one-stage adjustment does not satisfy timing, a main timing path shown in Fig. 11 may be adopted to further continuously perform similar adjustment at a point 4 and a point 5 until all timing paths of the read operation meet the requirements.

In conclusion, compared with an existing traditional design method, the clock tree implementation method and apparatus of the embodiments of the disclosure are capable of making each configuration bus independently perform clock tree synthesis while keeping synchronous logic design. In addition, since each configuration bus independently performs clock tree synthesis, a relatively small quantity of FFs and localization of a physical placement region can effectively reduce the latency of the clock tree, thereby reducing power consumption, area and congestion, achieving the effect of making the configuration buses globally asynchronous, effectively reducing the area and power consumption of a bus clock tree, improving the controllability of rear-end physical implementation, and shortening the Time-to-Market as well.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

### INDUSTRIAL APPLICABILITY

According to the embodiments of the disclosure, the data bus is converted into the first configuration bus, wherein the first configuration bus is an AXI bus, via the protocol bridge, the frequency of the first configuration being the frequency of the protocol bridge; and the first configuration bus is converted into the second configuration bus, wherein the second configuration bus is an AHP or APB bus, via the frequency dropping bridge, the frequency of the second configuration bus being the frequency of the configuration bus of the externally connected module. Thus, configuration buses may be globally asynchronous and locally synchronous while data buses are kept globally synchronous, so as to achieve PPTA optimization of SoC design, thereby improving the design flexibility of the SoC and competitiveness.

## Claims

1. A clock tree implementation method, applied to a System on Chip, SoC, comprising a core module (10) and an externally connected module (20), an interconnection matrix (12) in the core module (10) being connected to the externally connected module (20) via a bus conversion bridge (11) comprising a protocol bridge (111) and a frequency dropping bridge (112), the method comprising:
converting a data bus into a first configuration bus through the protocol bridge (S100), the frequency of the first configuration bus being the frequency of the protocol bridge (111), wherein the data bus is an Advanced eXtensible Interface, AXI, bus, and both the first configuration bus and the second configuration bus are Advanced High performance Buses, AHBs, or Advanced Peripheral Buses, APBs, and the protocol bridge (111) is a synchronous bridge; and
converting the first configuration bus into a second configuration bus through the frequency dropping bridge (S101), the frequency of the second configuration bus being the frequency of a configuration bus of the externally connected module (20).

2. The method according to claim 1, wherein the protocol bridge (111) is a single-stage protocol bridge, and when there are N externally connected modules, the protocol bridge (111) comprises N single-stage protocol bridges having a same frequency; and wherein the method comprises:
converting the data bus into the first configuration bus through the protocol bridge (S100) comprises:
converting N data buses into N first configuration buses respectively via the N single-stage protocol bridges having the same frequency, N being a positive integer greater than or equal to 2.

3. The method according to claim 1, wherein the protocol bridge (111) is an N-stage protocol bridge, and when there are N externally connected modules, the N-stage protocol bridge consists of a single-stage protocol bridge and a 1-to-N conversion bridge; and wherein the method comprises:
converting the data bus into the first configuration bus through the protocol bridge (S100) comprises:
converting one data bus into one first configuration bus through the single-stage protocol bridge, and then synchronously dividing said one first configuration bus into N first configuration buses through the 1-to-N conversion bridge, N being a positive integer greater than or equal to 2.

4. A System on Chip, SoC, comprising a core module (10) and an externally connected module (20), wherein the core module (10) comprises a frequency divider (13), an interconnection matrix (12) and a bus conversion bridge (11), the interconnection matrix is connected to the externally connected module via the bus conversion bridge, and the bus conversion bridge consists of a protocol bridge (111) and a frequency dropping bridge (112);
wherein the protocol bridge (111) is configured to convert a data bus into a first configuration bus, the frequency of the first configuration bus being the frequency of the protocol bridge (111), wherein the data bus is an Advanced eXtensible Interface, AXI, bus, and both the first configuration bus and the second configuration bus are Advanced High performance Buses, AHBs, or Advanced Peripheral Buses, APBs, and the protocol bridge (111) is a synchronous bridge; and
the frequency dropping bridge (112) is configured to convert the first configuration bus into a second configuration bus, the frequency of the second configuration bus being the frequency of a configuration bus of the externally connected module (20).

5. The SoC according to claim 4, wherein the protocol bridge (111) is a single-stage protocol bridge, and when there are N externally connected modules, the protocol bridge (111) comprises N single-stage protocol bridges having a same frequency; and
the N single-stage protocol bridges having the same frequency are configured to convert N data buses into N first configuration buses respectively, N being a positive integer greater than or equal to 2.

6. The SoC according to claim 4, wherein the protocol bridge (111) is an N-stage protocol bridge, and when there are N externally connected modules, the N-stage protocol bridge consists of a single-stage protocol bridge and a 1-to-N conversion bridge;
the single-stage protocol bridge is configured to convert one data bus into one first configuration bus; and
the1-to-N conversion bridge is configured to synchronously divide said one first configuration bus into N first configuration buses,
N being a positive integer greater than or equal to 2.

7. A computer storage medium having stored therein computer-executable instructions configured to execute the clock tree implementation method according to any one of claims 1-3.

## Patentansprüche

1. Taktbaumimplementierungsverfahren, angewandt auf ein System on Chip, SoC, umfassend ein Kernmodul (10) und ein extern angeschlossenes Modul (20), eine Verbindungsmatrix (12) in dem Kernmodul (10), die mit dem extern angeschlossenen Modul (20) über eine Buskonvertierungs-Bridge (11) angeschlossen ist, die eine Protokoll-Bridge (111) und eine Frequenzabfall-Bridge (112) umfasst, wobei das Verfahren umfasst:
Konvertieren eines Datenbusses in einen ersten Konfigurationsbus durch die Protokoll-Bridge (S100), wobei die Frequenz des ersten Konfigurationsbusses die Frequenz der Protokoll-Bridge (111) ist, wobei der Datenbus ein Advanced eXtensible Interface, AXI-Bus ist und beide, der erste Konfigurationsbus und der zweite Konfigurationsbus Advanced High performance Buses, AHBs, oder Advanced Peripheral Buses, APBs, sind, und die Protokoll-Bridge (111) eine synchrone Bridge ist; und
Konvertieren des ersten Konfigurationsbusses in einen zweiten Konfigurationsbus durch die Frequenzabfall-Bridge (S101), wobei die Frequenz des zweiten Konfigurationsbusses die Frequenz eines Konfigurationsbusses des extern angeschlossenen Moduls (20) ist.

2. Verfahren nach Anspruch 1, wobei die Protokoll-Bridge (111) eine single-stage Protokoll-Bridge ist, und wenn es N extern angeschlossene Module gibt, die Protokoll-Bridge (111) N single-stage Protokoll-Bridges umfasst, die eine gleiche Frequenz aufweisen; und wobei das Verfahren umfasst:
Konvertieren des Datenbusses in den ersten Konfigurationsbus durch die Protokoll-Bridge (S100) umfasst:
Konvertieren von N Datenbussen in jeweils N erste Konfigurationsbusse über die N single-stage Protokoll-Bridges, die die gleiche Frequenz aufweisen, wobei N eine positive ganze Zahl größer oder gleich 2 ist.

3. Verfahren nach Anspruch 1, wobei die Protokoll-Bridge (111) eine N-stage Protokoll-Bridge ist, und wenn es N extern angeschlossene Module gibt, die N-stage Protokoll-Bridge aus einer single-stage Protokoll-Bridge und einer 1-zu-N-Konvertierungs-Bridge besteht; und wobei das Verfahren umfasst:
Konvertieren des Datenbusses in den ersten Konfigurationsbus durch die Protokoll-Bridge (S100) umfasst:
Konvertieren eines Datenbusses in einen ersten Konfigurationsbus durch die single-stage Protokoll-Bridge und dann synchrones Teilen des einen ersten Konfigurationsbusses in N erste Konfigurationsbusse durch die 1-zu-N-Konvertierungs-Bridge, wobei N eine positive ganze Zahl größer oder gleich 2 ist.

4. System on Chip, SoC, umfassend ein Kernmodul (10) und ein extern angeschlossenes Modul (20), wobei das Kernmodul (10) einen Frequenzteiler (13), eine Verbindungsmatrix (12) und eine Buskonvertierungs-Bridge (11) umfasst, die Verbindungsmatrix an das extern angeschlossene Modul über die Buskonvertierungs-Bridge angeschlossen ist, und die Buskonvertierungs-Bridge aus einer Protokoll-Bridge (111) und einer Frequenzabfall-Bridge (112) besteht;
wobei die Protokoll-Bridge (111) konfiguriert ist, um einen Datenbus in einen ersten Konfigurationsbus zu konvertieren, wobei die Frequenz des ersten Konfigurationsbusses die Frequenz der Protokoll-Bridge (111) ist, wobei der Datenbus ein Advanced eXtensible Interface, AXI-Bus ist, und beide, der erste Konfigurationsbus und der zweite Konfigurationsbus Advanced High performance Buses, AHBs, oder Advanced Peripheral Buses, APBs, sind, und die Protokoll-Bridge (111) eine synchrone Bridge ist; und
die Frequenzabfall-Bridge (112) konfiguriert ist, um den ersten Konfigurationsbus in einen zweiten Konfigurationsbus zu konvertieren, wobei die Frequenz des zweiten Konfigurationsbusses die Frequenz eines Konfigurationsbusses des extern angeschlossenen Moduls (20) ist.

5. SoC nach Anspruch 4, wobei die Protokoll-Bridge (111) eine single-stage Protokoll-Bridge ist, und wenn es N extern angeschlossene Module gibt, die Protokoll-Bridge (111) N single-stage Protokoll-Bridges umfasst, die eine gleiche Frequenz aufweisen; und
die N single-stage Protokoll-Bridges, die die gleiche Frequenz aufweisen, konfiguriert sind, um N Datenbusse in jeweils N erste Konfigurationsbusse zu konvertieren, wobei N eine positive ganze Zahl größer oder gleich 2 ist.

6. SoC nach Anspruch 4, wobei die Protokoll-Bridge (111) eine N-stage Protokoll-Bridge ist, und wenn es N extern angeschlossene Module gibt, die N-stage Protokoll-Bridge aus einer single-stage Protokoll-Bridge und einer 1-zu-N-Konvertierungs-Bridge besteht;
die single-stage Protokoll-Bridge konfiguriert ist, um einen Datenbus in einen ersten Konfigurationsbus zu konvertieren; und
die 1-zu-N-Konvertierungs-Bridge konfiguriert ist, um synchron den einen ersten Konfigurationsbus in N erste Konfigurationsbusse zu teilen,
wobei N eine positive ganze Zahl größer oder gleich 2 ist.

7. Computerspeichermedium, das darin von einem Computer ausführbare Anweisungen aufweist, die konfiguriert sind, um das Taktbaumimplementierungsverfahren nach einem der Ansprüche 1-3 auszuführen.

## Revendications

1. Procédé d'implémentation d'arbre d'horloge, appliqué à un système sur puce, SoC, comprenant un module de coeur (10) et un module connecté en externe (20), une matrice d'interconnexion (12) dans le module de coeur (10) étant connectée au module connecté en externe (20) via un pont de conversion de bus (11) comprenant un pont de protocole (111) et un pont de chute de fréquence (112), le procédé comprenant :
la conversion d'un bus de données en un premier bus de configuration par le biais du pont de protocole (S100), la fréquence du premier bus de configuration étant la fréquence du pont de protocole (111), dans lequel le bus de données est un bus d'Interface extensible Avancée, AXI, et le premier bus de configuration et le second bus de configuration sont tous deux des Bus Haute performance Avancés, AHB, ou des Bus Périphériques Avancés, APB, et le pont de protocole (111) est un pont synchrone ; et
la conversion du premier bus de configuration en un second bus de configuration par le biais du pont de chute de fréquence (S101), la fréquence du second bus de configuration étant la fréquence d'un bus de configuration du module connecté en externe (20).

2. Procédé selon la revendication 1, dans lequel le pont de protocole (111) est un pont de protocole à un étage, et lorsqu'il y a N modules connectés en externe, le pont de protocole (111) comprend N ponts de protocole à un étage ayant une même fréquence ; et dans lequel le procédé comprend :
la conversion du bus de données en le premier bus de configuration par le biais du pont de protocole (S100) :
la conversion de N bus de données en N premiers bus de configuration respectivement via les N ponts de protocole à un étage ayant la même fréquence, N étant un nombre entier positif supérieur ou égal à 2.

3. Procédé selon la revendication 1, dans lequel le pont de protocole (111) est un pont de protocole à N étages, et lorsqu'il y a N modules connectés en externe, le pont de protocole à N étages consiste en un pont de protocole à un étage et en un pont de conversion 1 à N ; et dans lequel le procédé comprend :
la conversion du bus de données en le premier bus de configuration par le biais du pont de protocole (S100) :
la conversion d'un bus de données en un premier bus de configuration par le biais du pont de protocole à un étage, puis la division de façon synchrone dudit premier bus de configuration en N premiers bus de configuration par le biais du pont de conversion 1 à N, N étant un nombre entier positif supérieur ou égal à 2.

4. Système sur puce, SoC, comprenant un module de coeur (10) et un module connecté en externe (20), dans lequel le module de coeur (10) comprend un diviseur de fréquence (13), une matrice d'interconnexion (12) et un pont de conversion de bus (11), la matrice d'interconnexion est connectée au module connecté en externe via le pont de conversion de bus, et le pont de conversion de bus consiste en un pont de protocole (111) et un pont de chute de fréquence (112) ;
dans lequel le pont de protocole (111) est configuré pour convertir un bus de données en un premier bus de configuration, la fréquence du premier bus de configuration étant la fréquence du pont de protocole (111), dans lequel le bus de données est un bus d'Interface extensible Avancée, AXI, et le premier bus de configuration et le second bus de configuration sont tous deux des bus Haute Performance Avancés, AHB, ou des bus périphériques avancés, APB, et le pont de protocole (111) est un pont synchrone ; et
le pont de chute de fréquence (112) est configuré pour convertir le premier bus de configuration en un second bus de configuration, la fréquence du second bus de configuration étant la fréquence d'un bus de configuration du module connecté en externe (20).

5. SoC selon la revendication 4, dans lequel le pont de protocole (111) est un pont de protocole à un étage, et lorsqu'il y a N modules connectés en externe, le pont de protocole (111) comprend N ponts de protocole à un étage ayant une même fréquence ; et
les N ponts de protocole à un étage ayant la même fréquence sont configurés pour convertir N bus de données en N premiers bus de configuration respectivement, N étant un nombre entier positif supérieur ou égal à 2.

6. SoC selon la revendication 4, dans lequel le pont de protocole (111) est un pont de protocole à N étages, et lorsqu'il y a N modules connectés en externe, le pont de protocole à N étages consiste en un pont de protocole à un étage et en un pont de conversion 1 à N ;
le pont de protocole à un étage est configuré pour convertir un bus de données en un premier bus de configuration ; et
le pont de conversion 1 à N est configuré pour diviser de façon synchrone ledit premier bus de configuration en N premiers bus de configuration,
N étant un nombre entier positif supérieur ou égal à 2.

7. Support de stockage par ordinateur dans lequel sont stockées des instructions exécutables par ordinateur configurées pour exécuter le procédé d'implémentation d'arbre d'horloge selon l'une quelconque des revendications 1 à 3.
